(19) Europäisches Patentamt
European Patent Office
Office européen des brevets

(11) **EP 1 628 062 B1**

(12) **EUROPEAN PATENT SPECIFICATION**

(45) Date of publication and mention
of the grant of the patent:
**14.11.2007 Bulletin 2007/46**

(51) Int Cl.:
*F16L 13/14* *(2006.01)*    *B21D 39/04* *(2006.01)*

(21) Application number: **04019191.8**

(22) Date of filing: **12.08.2004**

(54) **Method of controlling the compression of a seal of a press connection arrangement**

Verfahren zur Kontrolle der Komprimierung eines Dichtringes in einem Pressfitting

Procédé de contrôle de la compression d'un joint d'étancheité dans un raccordement serré

(84) Designated Contracting States:
**AT BE BG CH CY CZ DE DK EE ES FI FR GB GR HU IE IT LI LU MC NL PL PT RO SE SI SK TR**

(43) Date of publication of application:
**22.02.2006 Bulletin 2006/08**

(73) Proprietor: **IBP Conex Limited
Tipton
West Midlands DY4 7JU (GB)**

(72) Inventor: **Webb, Steven Paul
Tipton
West Midlands, DY4 7LX (GB)**

(74) Representative: **Weber-Bruls, Dorothée et al
Forrester & Boehmert,
Pettenkoferstrasse 20-22
80336 München (DE)**

(56) References cited:
**EP-A- 0 361 630**      **EP-A- 0 870 946**
**EP-A- 1 167 853**      **DE-C- 19 840 668**
**GB-A- 1 321 652**      **US-A- 5 168 618**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention refers to a method for producing a press connection arrangement, comprising the steps of providing a tube, a socket and a sealing element, the tube being substantially cylindrical with an external tube diameter $d_7$, the socket having a first substantially cylindrical portion with an internal socket diameter $d_0$, an annular bead for housing the sealing element with an internal bead diameter $d_2$ and a second substantially cylindrical portion at an end of the socket with an internal socket mouth diameter $d_3$ and an external socket mouth diameter $d_9$, and the sealing element having an internal sealing element diameter $d_4$ and a sealing cord section diameter $d_5$, with $d_7 < d_0$ and ($d_7$ + 2 x $d_5$) < $d_2$; inserting an end of the tube into the socket such that the sealing element is arranged between the socket and the tube within the annular bead; and press-connecting the socket on the tube to obtain a press connection arrangement with the sealing element being at least partially compressed to obtain a sealing element cord cross section $d'_5 < d_5$.

Such a method is known in particular from DE 101 18 955 C2 referring to a press connection arrangement which enables the detection of a lack of compression of a socket on a tube with a sealing element between the socket and the tube, due to a leakage of fluid from the inside of the tube through a gap between the tube and the socket as well as between the sealing element and the tube or the sealing element and the socket. To create a joint between the socket and the tube and, thus, a press connection arrangement, in the prior art a pressing tool, in particular a pressing form jaw held within the pressing tool, is located around the socket. The pressing tool is then activated in order to reduce the form jaw diameter and subsequently the points of contact with the socket, thus creating a seal and retention of the tube.

EP 1 167 853 A2 is the closest prior art document and refers to a pressure fitting for a permanent juncture of tubes and similar, with a socket having an annular bead to house a round sealing element at its hook-shaped free end. The bead defines a recess for the sealing element, before being compressed, having a trapezoidal cross-section, practically rectangular with one oblique side that can be varied in angle, facing the free end of the socket and which maybe truncated or extend as an almost cylindrical end part, having a diameter sufficient to allow the tube to pass through when the latter is coupled to the socket. The shape of the bead of said socket is thought to give a safe method of squeezing the socket onto the tube, whereby the squeezing is both uniform and does not risk a damaging of the sealing element.

Also from EP 0 361 630 A1 as well as US 5,168,618, both belonging to the same patent family, a method for producing a press connection arrangement with the bead of a socket being in the form of a hook at the free end of said socket is known. To optimize the compression of a sealing element to be placed within the bead the internal diameter of the mouth of the socket has to be larger than the internal diameter of the socket in its cylindrical region, being adjacent the hook-shaped end, and the ratio of the sealing element cord cross section and the internal cross section of the cylindrical portion of the socket has to be at least 0.1.

DE 198 40 668 C1 discloses a further development of subject-matter of EP 0 361 630 A2 by considering the flow characteristic of the material of the socket in the area of the bead.

From GB 1 321 652 a press fitting arrangement with a controllable sealing element compression is known, making usage of a bead having an axial extent greater than its radial depth.

Manufactures of sealing elements in particular in form of O-rings recommend a maximum and minimum level of compression which are usually expressed as percentage of the O-ring cord section diameter. The minimum compression percentage recommendation from O-ring manufactures is generally deemed to be sufficient to create a seal to withstand pressures in the conditions encounted in its usage. But there is also the danger of compression set as a cause of failure of an O-ring as the material of the O-ring then loses its elasticity and any movement of the seal results in seal failure as the material fails to attempt to return to its original shape having become set in its previously compressed states. Thus, too low as well as too high deformations negatively effect the sealing characteristics of a sealing element within a press connection arrangement.

Accordingly, it is the object of the present invention to further develop the known method such that a control of the compression of the sealing element is possible.

This object is achieved in that in step a) the socket is casted and than machined internally as well as externally in order to obtain the selected diameters $d_1$, $d_2$, $d_3$, $d_8$ and $d_9$, with the internal socket mouth diameter $d_3$ being selected in dependence on a desired compression of the sealing element after the press-connection of step c) has been concluded such that $d_3 = (d_2 - (2 \times d_5) + ((d_5/100) \times 2 \times$ minimum sealing element compression)))$.

It is preferred according to the invention that the external socket mouth diameter $d_9$ is selected in dependence on the desired compression of the sealing element after the press-connection of step c) has been concluded.

Embodiments of the invention are characterized in that the desired compression of the sealing element is selected to be at least the minimum sealing element compression.

According to the invention it is preferred that a further compression of the sealing element is achieved in dependence of the tube deformation during step c) and/or the amount of engagement of the socket, in particular its second substantially cylindrical portion, with a pressing tool during step c).

In addition, it is proposed with the invention that step c) comprises the formation of a first indentation of the tube and/or the socket in the region of the first cylindrical portion with an internal tube diameter $d'_0$ and/or a second indentation of the tube and/or the socket in the region of the second cylindrical portion with an internal tube diameter $d''_0$, $d'_0 < d_0$ and $d''_0 < d_0$.

It is also proposed that in step b) a gap is provided between the socket and the tube with a gap depth $d_6$, and in step c) at least in the area of the first and/or second indentation the gap depth $d'_6$ between the socket and the tube is reduced to substantially zero.

In another aspect of the invention the same is characterized in that in step a) the socket is manufactured with a region of reduced internal diameter $d_1$ next to the first cylindrical portion in order to provide a stop member for the tube in step b).

It is proposed that, the socket is casted into a tube form and/or from a bar made out of red brass.

It is the astonishing perception of the invention that the compression of a sealing element of a press connection arrangement between a socket and a tube thereof is controllable via the dimensioning of the free end of the socket having a L-shape and also referred to as a lip. The substantially radially extending leg of the L-shape defines a part of an annular bead for housing the sealing element between the socket and the tube of the press connection arrangement; and the substantially axially extending leg of the L-shape provides a socket mouth into which the tube is to be inserted. The internal and/or external mouth diameter are used according to the invention to determine or rather select the compression of the sealing element. Exact diameters are obtained by machining a casted blank socket in line with the invention.

The invention, together with further objects and advantages, may be best understood, by example, with reference to the following description of embodiments of the invention taken together with the accompanying schematic drawings, in which

figure 1    is an exploded view of three sockets to be connected to one body of a press connection arrangement produced in line with the invention;

figure 2    is a partial cross sectional view of a socket assembled with the body shown in figure 1;

figure 3    is a cross section of a socket housing two sealing elements;

figure 4    is a partial cross sectional view of a socket into which a tube is inserted, prior to deformation thereof;

figure 5    is an enlarged partial view of figure 4;

figure 6    is a partial cross sectional view of a pressing tool applied to a socket into which a tube is inserted;

figure 7    is a partial cross sectional view of a socket with an inserted tube after applying a pressing force; and

figure 8    is an enlarged partial view of figure 7.

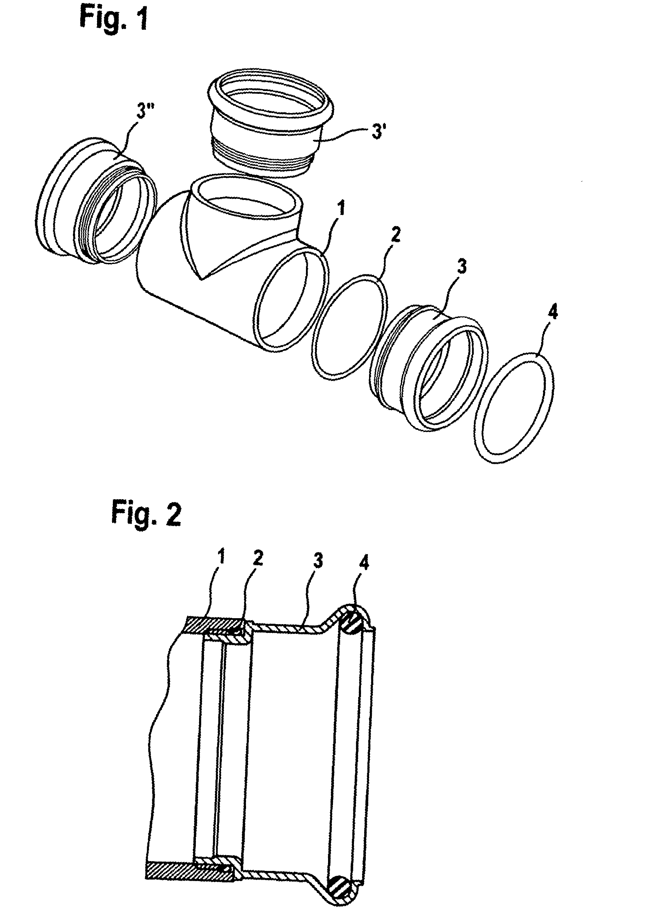

According to figure 1 the press connection arrangement produced in line with the invention comprises a body 1 in form of a T-element to be connected to three sockets 3, 3', 3'', one of the sockets, namely socket 3, being connectable at one of its ends to the body 1 after fitting a sealing element 2 in form of an O-ring and being pressable at its other end on a tube, not shown, after fitting a further sealing element 4 in form of an O-ring. A respective connection of the body 1 and the socket 3 with both sealing elements 2,4 is shown in figure 2.

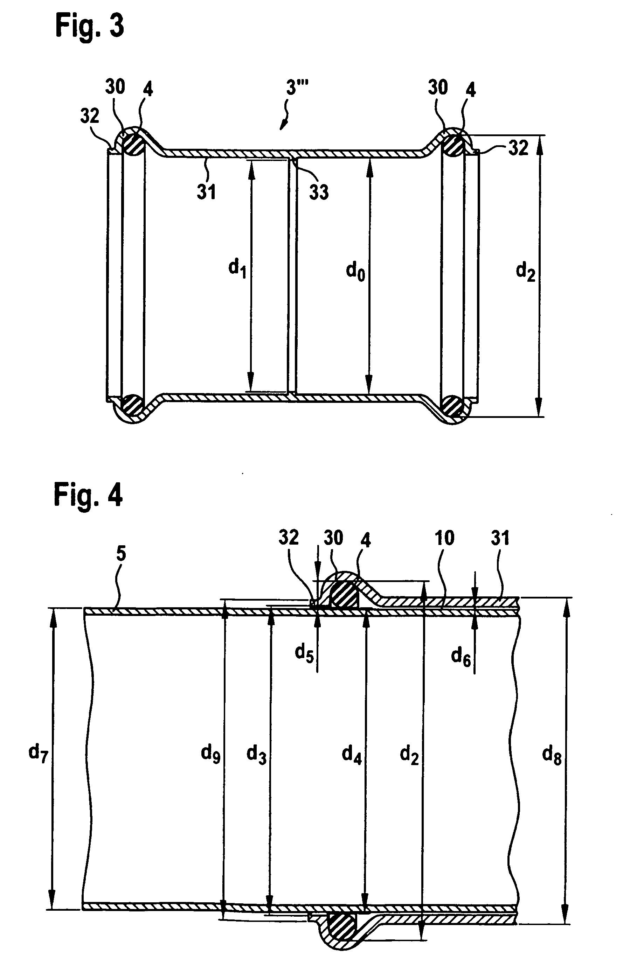

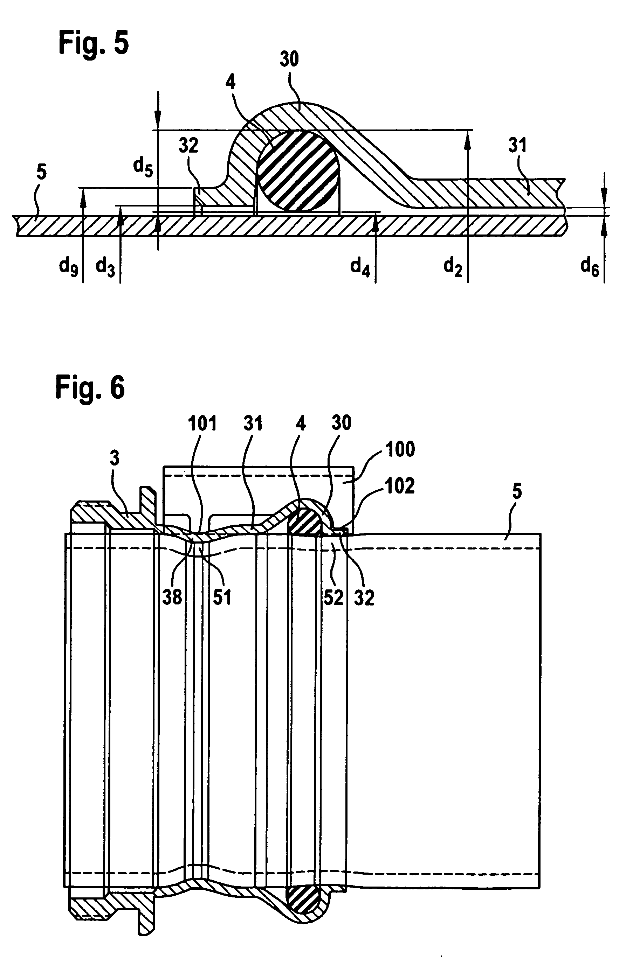

Each socket 3, 3', 3'', 3''' is casted from a tube like bar made in particular out of red brass and subsequently machined externally as well as internally to provide an annular bead 30 between two substantially cylindrical portions 31 and 32, the cylindrical portion 32 formed at the free end of the socket 3, 3''' is part of a so called lip of the socket, see figures 3 to 5. The lip has a cross section in form of the letter "L", with one leg extending substantially radially and belonging to the bead 30 and the other leg extending substantially axially and providing a so called mouth of the socket into which the tube 5 is to be inserted. The socket 3, 3 ''' is machined internally to obtain an internal socket diameter $d_0$ within the first cylindrical portion 31, to provide a region with a reduced internal diameter $d_1$ in order to obtain a stop member 33 for the tube 5, to exhibit an internal bead diameter $d_2$ in the region of the bead 30 and to provide an internal socket mouth diameter $d_3$ in the region of the second cylindrical portion 32 or rather lip. Not only the socket diameters $d_0$ to $d_3$ are precisely manufactured by machining, but also the external socket diameter $d_8$ as well as the external socket mouth diameter $d_9$. From figures 4 and 5 it can be seen that the socket 3 is dimensioned such that an external tube diameter $d_7$ is smaller than the internal socket mouth diameter $d_3$ in order to provide a gap 10 with a gap depth $d_6$. In addition, the selection of the socket dimensions ensures that the fluid path provided by the gap 10 is extended to the socket mouth in dependence on a sealing element cord section diameter $d_5$ as well as an internal sealing element diameter $d_4$ such that fluid from the inside of the tube 5 can leak to the outside of the press connection arrangement prior to applying a pressing action. That is, the external tube diameter $d_7$ plus two times the sealing element cord section diameter $d_5$ is smaller than the internal bead diameter $d_2$.

Of particular interest for the invention is the selection of the internal socket mouth diameter $d_3$ relative to the internal bead diameter $d_2$ as well as the sealing element cord section diameter $d_5$, in order to ensure that the minimum sealing element compression recommend by sealing element manufacturers is achieved when applying a pressing force. Said selection is defined by the following formular:

$$d_3=(d_2-(2 \times d_5 + ((d_5/100) \times (2 \times \text{minimum sealing element compression}))).$$

A further compression of the sealing element 4 is achieved by the deformation of the tube 5, in particular by choosing an enlarged external socket mouth diameter $d_9$.

The level of accuracy in adjusting the compression of the sealing element 4 is unlikely to be achieved in anything other than the machined diameters $d_3$ and $d_9$ in line with the invention.

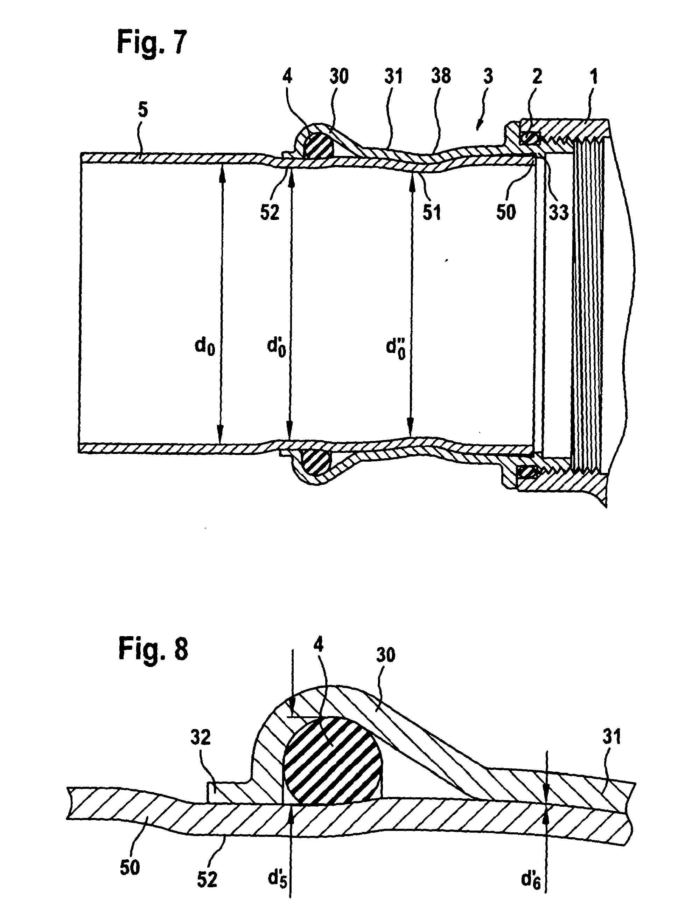

In figure 6 a pressing tool 100 with two projections 101 and 102 is shown, said projections contacting the two cylindrical portions 31, 32 arranged on both sides of the annular bead 30 of the socket 3 in order to form indentations 38, 51, 52 within the socket 3 and the tube 5 when applying a pressing action. In the area of the indentations 51, 52 of the end 50 of the tube 5 inserted into the socket 3 the internal diameter of the tube 5 is reduced to $d'_0$ and $d''_0$, respectively, and the gap 10 has vanished, as can be obtained from figures 7 and 8 showing a press connection arrangement obtained with a method according of the invention.

From figure 7 it can also be obtained that in the final state of the press connection arrangement of the invention the tube 5, inserted into the socket 3 such that its end 50 engages the stop member 33, is deformed together with the socket 3 in order to obtain a fluid tight seal between the tube 5 and the socket 3 as well as a retention of the tube 5 within the socket 3, in particular in the area of the indentations 38, 51, 52.

The final compression of the sealing element 4 can be obtained from figure 8 and is defined by the difference between the sealing element cord section diameter $d_5$ prior to applying a pressure and $d'_5$ after applying a pressure.

The body 1 is selected for conditioning a fluid flow within a pipework, an element of which is the tube 5, by re-directing, shutting-off and/or accelerating at least a part of said fluid flow or for providing adaption between diameters of different pipework elements. Thus, the body 1 can be provided in form of a T-element, an adaptor, a connector, a valve and/or an armature.

## Claims

1. Method for producing a press connection arrangement, comprising the steps of:

   a) providing a tube (5), a socket (3, 3', 3'', 3''') and a sealing element (4), the tube (5) being substantially cylindrical with an external tube diameter $d_7$, the socket (3, 3', 3'', 3''') having a first substantially cylindrical portion (31) with an internal socket diameter $d_0$, an annular bead (30) for housing the sealing element (4) with an internal bead diameter $d_2$ and a second substantially cylindrical portion (32) at an end of the socket (3, 3', 3'', 3''') with an internal socket mouth diameter $d_3$ and an external socket mouth diameter $d_9$, and the sealing element (4) having an internal sealing element diameter $d_4$ and a sealing cord section diameter $d_5$, with

   $$d_7 < d_0 \text{ and } (d_7 + 2 \times d_5) < d_2;$$

   b) inserting an end (50) of the tube (5) into the socket (3, 3', 3'', 3''') such that the sealing element (4) is arranged between the socket (3, 3', 3'', 3''') and the tube (5) within the annular bead (30); and

   c) press-connecting the socket (3, 3', 3'', 3''') on the tube (5) to obtain a press connection arrangement with the sealing element (4) being at least partially compressed to obtain a sealing element cord cross section $d'_5 < d_5$, wherein

   in step a) the socket (3, 3', 3'', 3''') is casted and then machined internally as well as externally in order to obtain the selected diameters $d_2$, $d_3$ and $d_9$, **characterized in that** the internal socket mouth diameter $d_3$ is selected in dependence on a desired compression of the sealing element (4) after the press-connection of step c) has been concluded such that $d_3 = (d_2 - (2 \times d_5) + ((d_5/100) \times 2 \times \text{minimum sealing element compression}))$.

2. Method according to claim 1, **characterized in that** the external socket mouth diameter $d_9$ is selected in dependence on the desired compression of the sealing element (4) after the press-connection of step c) has been concluded.

3. Method according to claim 1 or 2, **characterized in that**

the desired compression of the sealing element (4) is selected to be at least the minimum sealing element compression.

4. Method according to one of the preceding claims, **characterized in that**
a further compression of the sealing element (4) is achieved in dependence of the tube deformation during step c) and/or the amount of engagement of the socket (3), in particular its second substantially cylindrical portion (32), with a pressing tool (100) during step c).

5. Method according to one of the preceding claims, **characterized in that**
step c) comprises the formation of a first indentation (38, 51) of the tube (5) and/or the socket (3) in the region of the first cylindrical portion (31) with an internal tube diameter $d'_0$ and/or a second indentation (52) of the tube (5) and/or the socket (3) in the region of the second cylindrical portion (32) with an internal tube diameter $d''_0$, with $d'_0 < d_0$ and $d''_0 < d_0$.

6. Method according to claim 5, **characterized in that**
in step b) a gap (10) is provided between the socket (3) and the tube (5) with a gap depth $d_6$, and in step c) at least in the area of the first and/or second indentation (38, 51, 52) the gap depth $d'_6$ between the socket (3) and the tube (5) is reduced to substantially zero.

7. Method according to one of the preceding claims, **characterized in that**
in step a) the socket (3) is manufactured with a region of reduced internal diameter $d_1$ next to the first cylindrical portion (31) in order to provide a stop member (33) for the tube (5) in step b).

8. Method according to one of the preceding claims, **characterized in that**
the socket (3, 3', 3'', 3''') is casted into a tube form and/or from a bar made out of red brass.

**Patentansprüche**

1. Verfahren zur Herstellung einer Preßverbindungsanordnung, umfassend die folgenden Schritte:

a) Bereitstellen eines Rohres (5), einer Muffe (3, 3', 3", 3''') und eines Dichtungselementes (4), wobei das Rohr (5) im wesentlichen zylindrisch mit einem Rohr-Außendurchmesser $d_7$ ist, die Muffe (3, 3', 3", 3''') einen ersten im wesentlichen zylindrischen Abschnitt (31) mit einem Muffen-Innendurchmesser $d_0$ aufweist, einen ringförmigen Randwulst (30) für die Aufnahme des Dichtungselements (4) mit einem Randwulst-Innendurchmesser $d_2$ und einen zweiten im wesentlichen zylindrischen Abschnitt (32) an einem Ende der Muffe (3, 3', 3", 3''') mit einem Muffenmündungs-Innendurchmesser $d_3$ und einem Muffenmündungs-Außendurchmesser $d_9$ und wobei das Dichtungselement (4) einen Dichtungselement-Innendurchmesser $d_4$ und einen Dichtungsstrangabschnitt-Durchmesser $d_5$ aufweist, wobei

$$d_7 < d_0 \text{ und } (d_7 + 2 \times d_5) < d_2$$

ist;
b) Einführen eines Endes (50) des Rohrs (5) in die Muffe (3, 3', 3", 3''') dergestalt, daß das Dichtungselement (4) zwischen der Muffe (3, 3', 3", 3''') und dem Rohr (5) innerhalb des ringförmigen Randwulstes (30) angeordnet ist; und
c) Preßverbinden der Muffe (3, 3', 3", 3''') auf das Rohr (5), um eine Preßverbindungsanordnung mit dem Dichtungselement (4) zu erhalten, das zumindest zum Teil komprimiert ist, um einen Dichtungselementstrang-Querschnitt $d'_5 < d_5$ zu erhalten, wobei

beim Schritt a) die Muffe (3, 3', 3"; 3''') gegossen wird und danach innen sowie außen maschinell bearbeitet wird, um die ausgewählten Durchmesser $d_2$, $d_3$ und $d_9$ zu erhalten,
**dadurch gekennzeichnet, daß**
der Muffenmündungs-Innendurchmesser $d_3$ abhängig von einer gewünschten Komprimierung des Dichtungselements (4) ausgewählt wird, nachdem das Preßverbinden von Schritt c) abgeschlossen worden ist, dergestalt daß $d_3 = (d_2 - (2 \times d_5) + ((d_5/100) \times 2 \times \text{Mindestdichtungselementkomprimierung}))$).

**2.** Verfahren nach Anspruch 1, **dadurch gekennzeichnet, daß**
der Muffenmündungs-Außendurchmesser $d_9$ abhängig von der gewünschten Komprimierung des Dichtungselements (4) ausgewählt wird, nachdem die Preßverbindung von Schritt c) abgeschlossen worden ist.

**3.** Verfahren nach Anspruch 1 oder 2, **dadurch gekennzeichnet, daß**
die gewünschte Komprimierung des Dichtungselements (4) so ausgewählt wird, daß sie zumindest die Mindestdichtungselementkomprimierung ist.

**4.** Verfahren nach einem der vorangehenden Ansprüche, **dadurch gekennzeichnet, daß**
eine weitere Komprimierung des Dichtungselements (4) erzielt wird in Abhängigkeit von der Rohrdeformation während des Schrittes c) und/oder von dem Umfang des Eingriffs der Muffe (3), im besonderen ihres zweiten im wesentlichen zylindrischen Abschnitts (32), mit einem Preßwerkzeug (100) während des Schrittes c).

**5.** Verfahren nach einem der vorangehenden Ansprüche, **dadurch gekennzeichnet, daß**
der Schritt c) die Ausbildung einer ersten Einpressung (38, 51) des Rohres (5) und/oder der Muffe (3) im Bereich des ersten zylindrischen Abschnitts (31) mit einem Rohrinnendurchmesser $d'_0$ und/oder eine zweite Einpressung (52) des Rohres (5) und/oder der Muffe (3) im Bereich des zweiten zylindrischen Abschnitts (32) mit einem Rohrinnendurchmesser $d''_0$ umfaßt, mit $d'_0 < d_0$ und $d''_0 < d_0$.

**6.** Verfahren nach Anspruch 5, **dadurch gekennzeichnet, daß**
beim Schritt b) eine Lücke (10) zwischen der Muffe (3) und dem Rohr (5) mit einer Lückentiefe $d_6$ bereitgestellt wird und beim Schritt c) zumindest im Bereich der ersten und/oder der zweiten Einpressung (38, 51, 52) die Lückentiefe $d'_6$ zwischen der Muffe (3) und dem Rohr (5) im wesentlichen auf Null reduziert ist.

**7.** Verfahren nach einem der vorangehenden Ansprüche, **dadurch gekennzeichnet, daß**
beim Schritt a) die Muffe (3) hergestellt wird mit einem Bereich eines reduzierten Innendurchmessers $d_1$ neben dem ersten zylindrischen Abschnitt (31), um ein Anschlagselement (33) für das Rohr (5) beim Schritt b) bereitzustellen.

**8.** Verfahren nach einem der vorangehenden Ansprüche, **dadurch gekennzeichnet, daß**
die Muffe (3, 3', 3", 3''') in eine Rohrform gegossen wird und/oder aus einer Stange, hergestellt aus Rotguß, gegossen wird.

## Revendications

**1.** Procédé de production d'un agencement de connexion par pressage, comportant des étapes consistant à :

a) fournir un tube (5), une douille (3, 3', 3", 3''') et un élément d'étanchéité (4), le tube (5) étant sensiblement cylindrique, avec un diamètre de tube externe $d_7$, la douille (3, 3', 3", 3''') ayant une première partie sensiblement cylindrique (31) ayant un diamètre de douille interne $d_0$, un bourrelet annulaire (30) pour recevoir l'élément d'étanchéité (4), ayant un diamètre de cordon annulaire $d_2$, et une seconde partie sensiblement cylindrique (32) à une extrémité de la douille (3, 3', 3", 3'''), ayant un diamètre d'embouchure de douille interne $d_3$ et un diamètre d'embouchure de douille externe $d_9$, et l'élément d'étanchéité (4) ayant un diamètre d'élément d'étanchéité interne $d_4$ et un diamètre de tronçon de cordon d'étanchéité $d_5$, avec

$$d_7 > d_0 \text{ et } (d_7 + 2 \times d_5) < d_2 \text{ ;}$$

b) insérer une extrémité (50) du tube (5) dans la douille (3, 3', 3", 3'''), de telle sorte que l'élément d'étanchéité (4) est agencé entre la douille (3, 3', 3", 3''') et le tube (5) dans le bourrelet annulaire (30) ; et
c) connecter par pressage la douille (3, 3', 3", 3''') sur le tube (5) pour obtenir un agencement de connexion par pressage en ayant l'élément d'étanchéité (4) au moins partiellement comprimé pour obtenir une section transversale de cordon d'élément d'étanchéité $d'_5 < d_5$, où

à l'étape a), la douille (3, 3', 3", 3''') est coulée et ensuite usinée intérieurement de même qu'extérieurement pour obtenir les diamètres sélectionnés $d_2$, $d_3$ et $d_9$, **caractérisé en ce que** le diamètre d'embouchure de douille interne $d_3$ est sélectionné selon une compression souhaitée de l'élément d'étanchéité (4) après que la connexion par pressage de l'étape c) ait été achevée, de telle sorte que $d_3 = (d_2 - (2 \times d_5) + ((d_5/100) \times 2 \times$ compression d'élément d'étanchéité minimum))).

2. Procédé selon la revendication 1, **caractérisé en ce que**
le diamètre d'embouchure de douille externe $d_9$ est sélectionné selon la compression souhaitée de l'élément d'étanchéité 4) après que la connexion par pressage de l'étape c) ait été achevée.

3. Procédé selon la revendication 1 ou 2, **caractérisé en ce que**
la compression souhaitée de l'élément d'étanchéité (4) est sélectionnée pour être au moins la compression d'élément d'étanchéité minimum.

4. Procédé selon l'une quelconque des revendications précédentes, **caractérisé en ce que**
une compression supplémentaire de l'élément d'étanchéité (4) est obtenue selon la déformation de tube pendant l'étape c) et/ou la quantité de mise en prise de la douille (3), en particulier sa seconde partie sensiblement cylindrique (32), avec un outil de pressage (100) pendant l'étape c).

5. Procédé selon l'une quelconque des revendications précédentes, **caractérisé en ce que**
l'étape c) comporte la formation d'un premier enfoncement (38, 51) du tube (5) et/ou de la douille (3) dans la zone de la première partie, cylindrique (31), avec un diamètre de tube interne $d'_0$, et/ou d'un second enfoncement (52) du tube (5) et/ou de la douille (3) dans la zone de la seconde partie cylindrique (32), avec un diamètre de tube interne d"0, avec $d'_0 < d_0$ et d"$_0 < d_0$.

6. Procédé selon la revendication 5, **caractérisé en ce que**
à l'étape b), un espace (10) est fourni entre la douille (3) et le tube (5), ayant une profondeur d'espace d6, et à l'étape c), au moins dans la zone du premier et/ou second enfoncement (38, 51, 52), la profondeur d'espace $d'_6$ entre la douille (3) et le tube (5) est réduite sensiblement à zéro.

7. Procédé selon l'une quelconque des revendications précédentes, **caractérisé en ce que**
à l'étape a), la douille (3) est fabriquée avec une zone de diamètre interne réduit $d_1$ proche de la première partie cylindrique (31), pour fournir un élément d'arrêt (33) pour le tube (5) à l'étape b).

8. Procédé selon l'une quelconque des revendications précédentes, **caractérisé en ce que**
la douille (3, 3', 3", 3"') est coulée en une forme de tube et/ou à partir d'une barre constituée de laiton rouge.

## Fig. 1

## Fig. 2

## Fig. 3

$d_1$

$d_0$

$d_2$

30 4

32

31 33

30 4

32

3'''

## Fig. 4

5

32 30 4 10 31

$d_5$

$d_6$

$d_7$

$d_9$ $d_3$

$d_4$ $d_2$

$d_8$

## Fig. 5

## Fig. 6

## Fig. 7

## Fig. 8

**EP 1 628 062 B1**

**REFERENCES CITED IN THE DESCRIPTION**

**Patent documents cited in the description**

- DE 10118955 C2
- EP 1167853 A2
- EP 0361630 A1
- US 5168618 A
- DE 19840668 C1
- EP 0361630 A2
- GB 1321652 A